# EUROPEAN PATENT SPECIFICATION

(11) **EP 4 461 558 B1**
(45) Date of publication and mention of the grant of the patent: **28.01.2026**
(21) Application number: 22922984.4
(22) Date of filing: 09.02.2022
(51) Int. Cl.: B60B 1/04, B60B 5/02, B60B 1/02

(54) **RIM SPOKE**
RIM-SPEICHE
RAYON DE JANTE

(30) Priority: 25.01.2022 CN 202220206467 U; 25.01.2022 CN 202210088345
(43) Date of publication of application: 13.11.2024
(73) Proprietor: Xiamen Hongjiweiye Industrial Co., Ltd., Xiamen, Fujian 361000 (CN)
(72) Inventor: CHEN, Shunhe, Xiamen,, Fujian 361000 (CN); YU, Fugui, Xiamen, Fujian 361000 (CN); MENG, Wei, Xiamen, Fujian 361000 (CN); ZHANG, Na, Xiamen, Fujian 361000 (CN)
(74) Representative: Gunzelmann, Rainer
(86) International application number: PCT/CN2022/075691
(87) International publication number: WO 2023/142160

(56) References cited:
- WO-A1-2021/218675
- WO-A2-03/020535
- WO-A2-03/020535
- CN-A- 106 739 765
- CN-A- 106 739 765
- CN-A- 108 725 087
- CN-A- 113 815 348
- CN-U- 214 215 357
- CN-Y- 2 229 365
- CN-Y- 2 229 365
- US-B2- 8 657 387

## Description

### TECHNICAL FIELD

The present disclosure relates to the technical field of rim spokes, and in particular to a rim spoke.

### BACKGROUND

One end of a rim spoke is connected to a rim, and the other end of the rim spoke is connected to a hub. The existing rim spoke generally is a spoke made of a rigid material, e.g., a steel spoke. When the tension of the spoke approaches the limit of the rigid material, the spoke will be deformed when subjected to a heavy impact, which will eventually result in the weakening of strength of the spoke and the hidden trouble of riding.

United States Patent Application Publication No. US 8 657 387 B2 discloses an improved connecting system for a vehicle wheel spoke. Specifically, as shown in FIGs. 7a-7b of US 8 657 387 B2, the connector 208 includes an enlarged portion 210 with a flared shoulder 212. One end of the connector 208 includes splines 214 to mate with a wrench for rotational manipulation of the connector 208. Threaded ferrule 206 includes external threads 216 and flats 218 to mate with a wrench for rotational manipulation of the threaded connector 208. The inside diameter of the threaded ferrule 206 includes a bearing surface or step 220 to create a closely matched bearing surface to mate with the flared shoulder 212 of the connector 208. Connector 208 is joined to the spoke 2 by means of an overmolded interface 226. A bracing element, such as a rim 222 or hub flange (not shown), includes a threaded hole 224 in the spoke bed 207 wall. By utilizing separate wrenches on splines 214 and flats 218, the threaded ferrule 206 may be rotated independently from the connector 208 about the tensile axis 36. Threaded ferrule 206 may be rotated relative to rim 222 to adjust the effective length of the spoke 2, thus adjusting the spoke tension 30. The threaded ferrule 206 serves as an intermediate connecting member to facilitate the connection between the spoke 2 and the bracing element or rim 222. Document CN 106 739 765 discloses another spoke arrangement.

### SUMMARY

The invention is defined by the appended claims. An objective of the present disclosure is to provide a rim spoke. When a textile fiber spoke rope in a high tension state is subjected to a heavy impact, part of an impact force is cushioned due to the flexibility and strength margin of the spoke rope itself, so that the original characteristics of the spoke rope can still be kept under an extreme impact force without irreversible deformation, thereby reducing failure rate of riding, ensuring the riding safety, reducing the daily maintenance requirement of a wheel, and reducing costs.

To achieve the objective above, the present disclosure employs the following technical solution:
A rim spoke includes a spoke rope and nipples. Mounting heads are fixedly sleeved on both ends of the spoke rope; through mounting holes are formed in the nipples; and the nipples are fixedly sleeved on the mounting heads by means of the mounting holes. Each of the mounting heads is provided with a through sleeving hole, and an outer wall of each of the mounting heads is radially provided with a pressing opening communicating with the sleeving hole. An end of the spoke rope is configured to be provided in the sleeving hole, the pressing opening is configured to form a closed compact structure by means of an adhesive and pressing of a machine platform, and the closed compact structure is configured to fix the spoke rope.

Preferably, the spoke rope is made of a textile fiber material.

Preferably, the spoke rope is made by braiding of a plurality of textile fiber ropes.

Preferably, each of the mounting holes is a tapered hole with an inner diameter increasing from inside to outside, each of the mounting heads has a uniform outer diameter, and the outer diameter of each of the mounting heads is in fit with a maximum inner diameter of the mounting hole.

Preferably, an outer end of each of the nipples is provided with a threaded structure, and each of the nipples in their installed state is configured to be provided in a spoke hole of a rim or a hub to be in fit with a nut, so as to connect the spoke rope to the rim or the hub.

Preferably, the mounting heads and the nipples are made of metal materials.

By adopting the technical solution, the present disclosure has the following beneficial effects compared with the background art:
1. The spokes in the prior art are generally made of rigid materials, and have poor buffering capacity when subjected to a heavy impact, which eventually leads to irreversible deformation. The present disclosure spans the technical blind area and creatively adopts flexible textile fiber spoke rope as a spoke material. Compared with the traditional rigid spoke which can only bear the ultimate tension of 2-3 kN, the textile fiber spoke rope can bear the ultimate tension of 6-8 kN. Moreover, the textile fiber spoke rope still maintains more strength margin while improving the tension and rigidity. When the textile fiber spoke rope in a high tension state is subjected to a heavy impact, part of an impact force is cushioned due to the flexibility and strength margin of the spoke rope itself, so that the original characteristics of the spoke rope can still be kept under an extreme impact force without irreversible deformation, thereby reducing failure rate of riding, ensuring the riding safety, reducing the daily maintenance requirement of a wheel, and reducing costs.
2. According to the rim spoke provided by the present disclosure, the rim made of the textile fiber spoke rope is light in weight, and can improve the riding comfort of a user when especially used with other carbon fiber wheel sets. Moreover, compared with the traditional rigid spoke, the rim spoke provided by the present disclosure is more environmentally friendly.
3. According to the rim spoke provided by the present disclosure, an end of the spoke rope is fixedly inserted into the sleeving hole of the mounting head by means of an adhesive and the pressing of a machine platform, the mounting hole on the nipple is a tapered hole with an inner diameter increasing from inside to outside, and an outer diameter of the mounting head is in fit with a maximum inner diameter of the mounting hole. Before the mounting of the mounting head, the nipple is sleeved on the spoke rope, and after the mounting head is fixed on the end of the spoke rope, the nipple is moved to make the mounting hole be tightly meshed with the mounting head. As the outer diameter of the mounting head is in fit with the maximum inner diameter of the mounting hole, during the moving of the nipple, the mounting hole gradually becomes smaller and is slightly deformed by the extrusion of the mounting head, leading to an increase in an outward extrusion force on the nut in fit with the mounting hole. The closer to the end of the spoke rope, the greater the extrusion force, which effectively prevents the hidden trouble caused by a situation that the nut loosens and falls off from the nipple due to the vibration of the spoke rope during riding. Moreover, the slight deformation of the mounting head also extrudes the sleeving hole, so that the mounting head is pressed against the end of the spoke rope.

### BRIEF DESCRIPTION OF THE DRAWINGS

FIG. 1 is a schematic diagram of a structure according to the present disclosure;
FIG. 2 is an exploded schematic diagram of a structure at an end of a spoke rope according to the present disclosure;
FIG. 3 is a schematic structural diagram of a connection part of a spoke rope and a mounting head according to the present disclosure;
FIG. 4 is a structural sectional diagram of a connection part of a nipple and a mounting head according to the present disclosure.

### DETAILED DESCRIPTION OF THE EMBODIMENTS

In order to make the objectives, technical solutions and advantages of the present disclosure more clearly, the present disclosure is further described in detail below with reference to the accompanying drawings and the embodiments. It should be understood that specific embodiments described here are only used to illustrate rather than limiting the present disclosure.

In the description of the present disclosure, it needs to be understood that the orientation or positional relationship indicated by terms "upper", "lower", "left", "right", "vertical", "horizontal", "inside" and "outside" is based on the orientation or positional relationship shown in the drawings only for convenience of description of the present disclosure and simplification of description rather than indicating or implying that the apparatus or element referred to must have a particular orientation, be constructed and operate in a particular orientation, and thus are not to be construed as limiting the present disclosure.

### Embodiment:

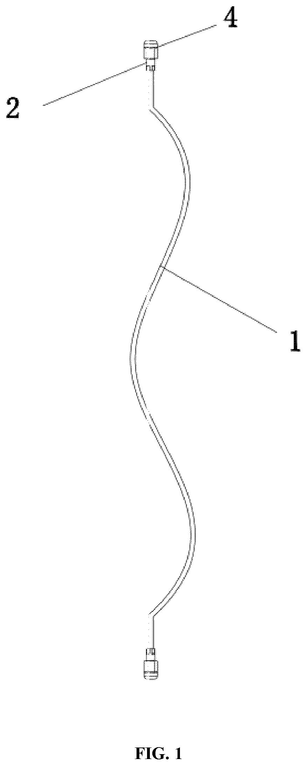

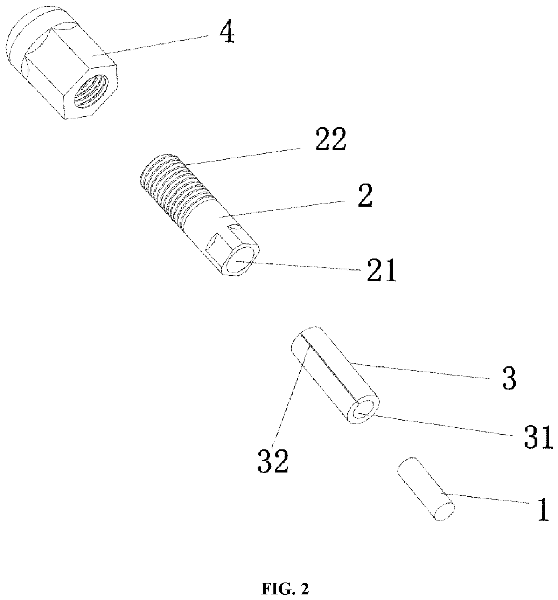

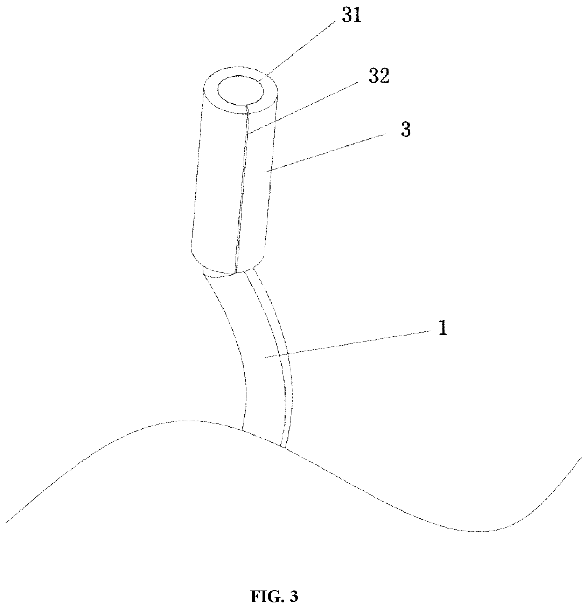

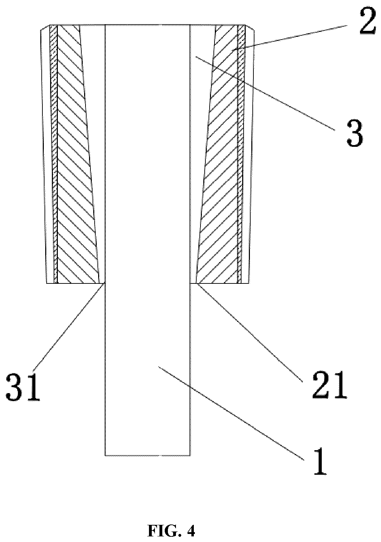

Please referring to FIG. 1 to FIG. 4, a rim spoke is provided, including a spoke rope 1, and nipples 2. Both ends of the spoke rope 1 are fixedly sleeved with mounting heads 3. Through mounting holes 21 are formed in the nipples 2. The nipples 2 is fixedly sleeved on the mounting heads 3 by means of the mounting holes 21.

The spoke rope 1 is made of a textile fiber material. The surface of the spoke rope 1 is cut and polished to make the surface uniform, and the surface of the spoke rope 1 is free of being contaminated with excessive dirt due to the tension of the spoke rope 1 itself.

The spoke rope 1 is of a hollow braided structure and is made by braiding of multiple textile fiber ropes. In this embodiment, the textile fiber material is polyester fiber.

The mounting head 3 and the nipple 2 are made of metal materials. The mounting hole 21 is a tapered hole with an inner diameter increasing from inside to outside, the mounting head 3 has a uniform outer diameter, and the outer diameter of the mounting head 3 is in fit with a maximum inner diameter of the mounting hole 21. An outer end of the nipple 2 is provided with a threaded structure 22, and the nipple 2 is inserted into a spoke hole of the rim or a hub to be in fit with a nut 4, so as to connect the spoke rope 1 to the rim or the hub.

The mounting head 3 is provided with a sleeving hole 31, and an outer wall of the mounting head 3 is radially formed with a pressing opening 32 communicating with the sleeving hole 31. An end of the spoke rope 1 is inserted into the sleeving hole 31. The pressing opening 32 forms a closed compact structure by means of an adhesive and pressing of a machine platform, so as to fix the spoke rope 1, thus ensuring that the mounting head 3 is firmly sleeved on the end of the spoke rope.

Before the mounting of the mounting head 3, the nipple 2 is sleeved on the spoke rope 1, and after the mounting head 3 is fixed on the end of the spoke rope, the nipple 2 is moved to make the mounting hole 21 be tightly meshed with the mounting head 3. As the outer diameter of the mounting head 3 is in fit with the maximum inner diameter of the mounting hole 21, during the moving of the nipple 2, the mounting hole 21 gradually becomes smaller and is slightly deformed by the extrusion of the mounting head 3, leading to an increase in an outward extrusion force on the nut 4 in fit with the mounting hole. The closer to the end of the spoke rope 1, the greater the extrusion force, which effectively prevents the nut 4 from falling off from the nipple 2 due to the vibration of the spoke rope 1 during riding. Moreover, the slight deformation of the mounting head 3 also extrudes the sleeving hole 31, so that the mounting head 3 is pressed against the end of the spoke rope 1.

## Claims

1. A rim spoke, comprising a spoke rope (1) and nipples (2), wherein mounting heads (3) are fixedly sleeved on both ends of the spoke rope (1); through mounting holes (21) are formed in the nipples (2); and the nipples (2) are fixedly sleeved on the mounting heads (3) by means of the mounting holes (21),
**characterized in that**
each of the mounting heads (3) is provided with a through sleeving hole (31), and an outer wall of each of the mounting heads (3) is radially provided with a pressing opening (32) communicating with the sleeving hole (31); and
an end of the spoke rope (1) is configured to be provided in the sleeving hole (31), the pressing opening (32) is configured to form a closed compact structure by means of an adhesive and pressing of a machine platform, and the closed compact structure is configured to fix the spoke rope (1).

2. The rim spoke according to claim 1, wherein the spoke rope (1) is made of a textile fiber material.

3. The rim spoke according to claim 2, wherein the spoke rope (1) is made by braiding of a plurality of textile fiber ropes.

4. The rim spoke according to claim 1, wherein each of the mounting holes (21) is a tapered hole with an inner diameter increasing from inside to outside, each of the mounting heads (3) has a uniform outer diameter, and the outer diameter of each of the mounting heads (3) is in fit with a maximum inner diameter of the mounting hole (21).

5. The rim spoke according to claim 1, wherein an outer end of each of the nipples (2) is provided with a threaded structure (22), and each of the nipples (2) in their installed state is configured to be provided in a spoke hole of a rim or a hub to be in fit with a nut (4), so as to connect the spoke rope (1) to the rim or the hub.

6. The rim spoke according to claim 1, wherein the mounting heads (3) and the nipples (2) are made of metal materials.

## Patentansprüche

1. Eine Felgenspeiche, umfassend ein Speichenseil (1) und Nippel (2), wobei Montageköpfe (3) fest über beide Enden des Speichenseils (1) aufgesteckt sind; durchgehende Montagebohrungen (21) in den Nippeln (2) ausgebildet sind; und die Nippel (2) mittels der Montagebohrungen (21) fest auf die Montageköpfe (3) aufgesteckt sind,
**dadurch gekennzeichnet, dass**
jeder der Montageköpfe (3) mit einer durchgehenden Steckbohrung (31) versehen ist und eine Außenwand jedes der Montageköpfe (3) radial mit einer die Steckbohrung (31) kommunizierenden Pressöffnung (32) versehen ist; und
ein Ende des Speichenseils (1) dazu eingerichtet ist, in der Steckbohrung (31) vorgesehen zu sein, die Pressöffnung (32) dazu eingerichtet ist, mittels eines Klebstoffs und eines Pressens einer Maschinenplattform eine geschlossene kompakte Struktur zu bilden, und die geschlossene kompakte Struktur dazu eingerichtet ist, das Speichenseil (1) zu fixieren.

2. Die Felgenspeiche nach Anspruch 1, wobei das Speichenseil (1) aus einem Textilfasermaterial hergestellt ist.

3. Die Felgenspeiche nach Anspruch 2, wobei das Speichenseil (1) durch Flechten einer Mehrzahl von Textilfaserseilen hergestellt ist.

4. Die Felgenspeiche nach Anspruch 1, wobei jede der Montagebohrungen (21) eine konische Bohrung mit einem sich von innen nach außen vergrößernden Innendurchmesser ist, jeder der Montageköpfe (3) einen gleichmäßigen Außendurchmesser aufweist, und der Außendurchmesser jedes der Montageköpfe (3) in Passung mit einem maximalen Innendurchmesser der Montagebohrung (21) ist.

5. Die Felgenspeiche nach Anspruch 1, wobei ein äußeres Ende jedes der Nippel (2) mit einer Gewindestruktur (22) versehen ist und jeder der Nippel (2) in seinem montierten Zustand dazu eingerichtet ist, in einem Speichenloch einer Felge oder einer Nabe vorgesehen zu sein, um mit einer Mutter (4) in Passung zu stehen, sodass das Speichenseil (1) mit der Felge oder der Nabe verbunden ist.

6. Die Felgenspeiche nach Anspruch 1, wobei die Montageköpfe (3) und die Nippel (2) aus Metallmaterialien hergestellt sind.

## Revendications

1. Rayon de jante comprenant un cordage de rayon (1) et des raccords filetés (2), dans lequel des têtes de montage (3) sont emmanchées à demeure aux deux extrémités du câble de rayon (1); des trous de montage traversants (21) sont formés dans les raccords filetés (2); et les raccords filetés (2) sont emmanchés à demeure sur les têtes de montage (3) au moyen des trous de montage (21).
**caractérisé en ce que**
chacune des têtes de montage (3) est pourvue d'un trou de gaine traversant (31), et une paroi extérieure de chacune des têtes de montage (3) est pourvue radialement d'une ouverture de pression (32) communiquant avec le trou de gaine (31) ; et
une extrémité du cordage de rayon (1) est conçue pour être logée dans le trou de gaine (31), l'ouverture de pression (32) est conçue pour former une structure compacte fermée au moyen d'un adhésif et de la pression d'une plate-forme de machine, et la structure compacte fermée sert à protéger le cordage de rayon (1).

2. Rayon de jante selon la revendication 1, dans lequel le cordage de rayon (1) est fabriqué en fibres textiles.

3. Rayon de jante selon la revendication 2, dans lequel le cordage de rayon (1) est fabriqué par tressage d'une pluralité de cordages en fibres textiles.

4. Rayon de jante selon la revendication 1, dans lequel chacun des trous de montage (21) est un trou conique dont le diamètre intérieur augmente de l'intérieur vers l'extérieur, chacune des têtes de montage (3) a un diamètre extérieur régulier , et le diamètre extérieur de chacune des têtes de montage (3) correspond au diamètre intérieur maximal du trou de montage (21).

5. Rayon de jante selon la revendication 1, dans lequel une extrémité extérieure de chacun des raccords filetés (2) est pourvue d'une structure filetée (22), et chacun des raccords filetés (2), lorsqu'il est mis en place, peut être placé dans un trou de rayon d'une jante ou d'un moyeu afin de se loger dans un écrou (4), de manière à relier le cordage de rayon (1) à la jante ou au moyeu.

6. Rayon de jante selon la revendication 1, dans lequel les têtes de montage (3) et les raccords filetés (2) sont fabriqués en métal.
